# EUROPEAN PATENT APPLICATION

(11) **EP 4 412 386 A1**
(43) Date of publication of application: **07.08.2024**
(21) Application number: 22876117.7
(22) Date of filing: 26.09.2022
(51) Int. Cl.: H04W 76/15, H04W 16/28, H04W 76/30, H04W 84/12

(54) **COMMUNICATION DEVICE, METHOD FOR CONTROLLING COMMUNICATION DEVICE, AND PROGRAM THEREOF**

(30) Priority: 30.09.2021 JP 2021162358
(71) Applicant: CANON KABUSHIKI KAISHA, Tokyo 146-8501 (JP)
(72) Inventor: TAKADA Tomoyuki, Tokyo 146-8501 (JP)
(74) Representative: Canon Europe Limited
(86) International application number: PCT/JP2022/035675
(87) International publication number: WO 2023/054250

(57) **Abstract**

In a case where a plurality of initiation frames is exchanged with a counterpart communication apparatus before EMLMR operation starts, the EMLMR operation is performed on one of links.

## Description

### Technical Field

The present invention relates to a communication apparatus configured to perform wireless communication, a method for controlling the communication apparatus, and a program thereof.

### Background Art

Data volume in communication is increasing in recent years, and communication technologies such as wireless local area networks (wireless LANs) have been developed. The Institute of Electrical and Electronics Engineers (IEEE) 802.11 standard series are known as major communication standards for wireless LANs. The IEEE 802.11 standard series include the IEEE 802.11a/b/g/n/ac/ax standards. For example, IEEE 802.11ax, which is the most recent standard, offers standardized technologies for improving communication speed in congested conditions in addition to a high peak throughput of a maximum of 9.6 gigabits per second (Gbps) using orthogonal frequency-division multiple access (OFDMA) (refer to Patent Document 1). OFDMA is the abbreviation for Orthogonal frequency division multiple access.

A task group referred to as IEEE 802.11be has been developed as a next-generation standard for further improvements in throughput, spectral efficiency, and communication latency.

IEEE 802.11be discusses Multi-Link communication in which a single access point (AP) establishes a plurality of Links with a single Station (STA) using the 2.4, 5, and 6 GHz frequency bands and performs simultaneous communication. In the Multi-Link communication, the AP is referred to as Access point multi-link device (AP MLD), and the STA is referred to as non-Access point multi-link device (Non-AP MLD).

Further, IEEE 802.11be discusses Enhanced multi-link multi-radio (EMLMR) operation in the Multi-Link communication. A Non-AP MLD operating in an EMLMR mode performs initial frame exchange with a number of spatial streams based on per-link spatial stream capabilities of EMLMR links and thereafter operates on links used to perform the initial frame exchange as described below until a frame exchange sequence ends. The operation is specifically an operation of receiving Physical layer convergence protocol data units (PPDUs) with a number of spatial streams up to a value indicated in an EMLMR SUPPORTED MCS AND NSS SET subfield of a Common Info field of a Basic variant Multi-Link element and transmitting PPDUs with the number of spatial streams indicated in the EMLMR SUPPORTED MCS AND NSS SET subfield.

### Citation List

### Patent Literature

PTL 1: Japanese Patent Laid-Open No. 2018-50133

### Summary of Invention

### Technical Problem

No consideration is given to operations in a case where another initiation frame is received over another Enhanced multi-link multi-radio (EMLMR) link after initial frame exchange is started over a specific EMLMR link, i.e., in a period from reception of an initiation frame for initiating a frame exchange sequence to initiation of response frame transmission. Thus, in a case where a plurality of initiation frames is exchanged with a counterpart communication apparatus during the period, it is necessary to control operation in an EMLMR mode properly.

The invention of the present application is directed to controlling operation in an EMLMR mode properly in a case where a plurality of initiation frames is exchanged with a counterpart communication apparatus during the period.

### Solution to Problem

A communication apparatus configured to operate as a Multi-Link Device based on the Institute of Electrical and Electronics Engineers (IEEE) 802.11 series standards according to the invention of the present application includes a detection unit configured to detect reception of a second initiation frame for initiating a frame exchange sequence over a second Enhanced multi-link multi-radio (second ENILMR) link different from a first Enhanced multi-link multi-radio (first EMLMR) link from another communication apparatus in a period from reception of a first initiation frame for initiating the frame exchange sequence over the first EMLMR link from the other communication apparatus to transmission of a response frame to the first initiation frame and a control unit configured to perform control to continue the frame exchange sequence over the first EMLMR link or the second EMLMR link in a case where the reception of the second initiation frame in the period is detected by the detection unit.

### Advantageous Effects of Invention

The present invention makes it possible to control operation in an Enhanced multi-link multi-radio (EMLMR) mode properly in a case where a plurality of initiation frames is exchanged with a counterpart communication apparatus before EMLMR operation is started.

### Brief Description of Drawings

[Fig. 1] Fig. 1 is a diagram illustrating a network configuration according to the present invention.
[Fig. 2] Fig. 2 is a diagram illustrating a hardware configuration of a communication apparatus according to the present invention.
[Fig. 3] Fig. 3 is a diagram illustrating a functional configuration of a communication apparatus according to the present invention.
[Fig. 4] Fig. 4 is a diagram illustrating an outline of Multi-Link communication.
[Fig. 5A] Fig. 5A is a diagram illustrating a Basic variant Multi-Link element included in an Association Request frame.
[Fig. 5B] Fig. 5B is a diagram illustrating an EMLMR Capabilities subfield included in a Common Info field of a Basic variant Multi-Link element.
[Fig. 6] Fig. 6 is a flowchart illustrating a process that is executed to start a frame exchange sequence over an Enhanced multi-link multi-radio (EMLMR) link according to the present invention.
[Fig. 7] Fig. 7 is a flowchart illustrating a process that is executed to start a frame exchange sequence over an EMLMR link according to the present invention. Description of Embodiments

Various exemplary embodiments of the present invention will be described in detail below with reference to the attached drawings. It is to be noted that configurations according to the exemplary embodiments described below are merely examples and that the present invention is not limited to the illustrated configurations.

### (Configuration of Wireless Communication System)

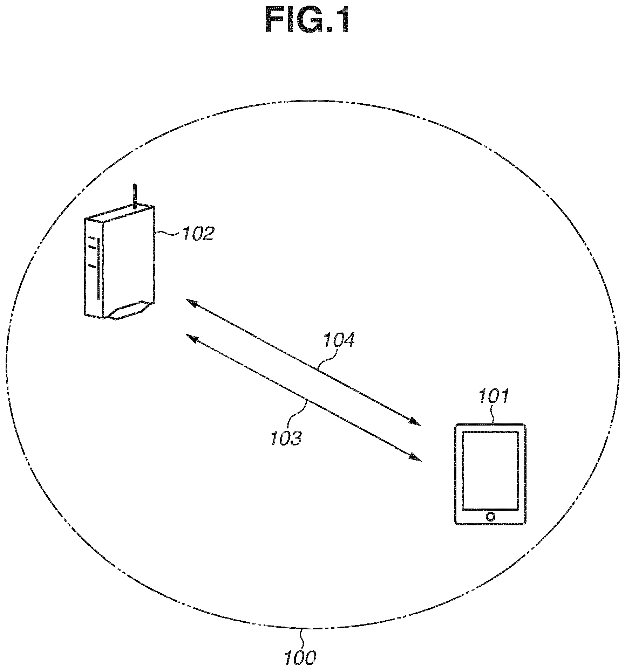

Fig. 1 illustrates a configuration of a network that a communication apparatus 101 (hereinafter, "non-access point (Non-AP) multi-link device (MLD) 101") according to the present exemplary embodiment searches. A communication apparatus 102 (hereinafter, "access point (AP) MLD 102") is an AP having a role of configuring a wireless network 100. The AP MLD 102 can communicate with the Non-AP MLD 101. The present exemplary embodiment is applied to the Non-AP MLD 101 and the AP MLD 102.

The Non-AP MLD 101 and the AP MLD 102 each can perform wireless communication based on the Institute of Electrical and Electronics Engineers (IEEE) 802.11be (Extreme High Throughput (EHT)) standards. IEEE is the abbreviation for Institute of Electrical and Electronics Engineers. The Non-AP MLD 101 and the AP MLD 102 can communicate in the 2.4, 5, and 6 gigahertz (GHz) frequency bands. The frequency band used by each communication apparatus is not limited to the foregoing frequency bands and can be another frequency band such as the 60 GHz band. Further, the Non-AP MLD 101 and the AP MLD 102 can communicate using the 20, 40, 80, 160, and 320 megahertz (MHz) bandwidths. The bandwidth used by each communication apparatus is not limited to the foregoing bandwidths and can be another bandwidth such as 240 or 4 MHz.

The Non-AP MLD 101 and the AP MLD 102 are capable of realizing Multi User (MU) communication to multiplex signals of a plurality of users by performing orthogonal frequency division multiple access (OFDMA) communication based on the IEEE 802.11be standards. OFDMA is the abbreviation for Orthogonal Frequency Division Multiple Access. In OFDMA communication, portions (Resource Units (RUs)) of a divided frequency band are allocated to stations (STAs) without overlapping with each other, and carrier waves of the STAs are orthogonal. Thus, an AP can perform parallel communication with a plurality of STAs within a predefined bandwidth.

In general, a range over which radio waves can reach varies with frequency, and it is known that the lower the frequency, the larger the diffraction of radio waves and the longer the distance the radio waves can reach, whereas the higher the frequency, the smaller the diffraction of radio waves and the shorter the distance the radio waves can reach. Even in a case where there is an obstacle on a path, radio waves with low frequency can bend along the obstacle and reach their destinations, whereas radio waves with high frequency are difficult to bend due to their high directivity and may fail to reach their destinations. Meanwhile, the 2.4-gigahertz (GHz) frequency is widely used by other devices, and microwaves are known to emit radio waves of the same frequency band. Although radio waves are emitted by the same device, the strength and/or Signal/Noise (SN) ratio of the radio waves that are received may vary based on the frequency band, depending on a location and/or environment.

While the Non-AP MLD 101 and the AP MLD 102 support the IEEE 802.11be standards, the Non-AP MLD 101 and the AP MLD 102 may also support legacy standards prior to the IEEE 802.11be standards. Specifically, the Non-AP MLD 101 and the AP MLD 102 may support at least one of the IEEE 802.11a/b/g/n/ac/ax standards. Further, other communication standards such as Bluetooth^{®}, Near Field Communication (NFC), ultra-wideband (UWB), ZigBee, and multiband orthogonal frequency division multiplexing (Multiband-OFDM) alliance (MBOA) may also be supported in addition to the IEEE 802.11 series standards. UWB is the abbreviation for Ultra Wide Band, and MBOA is the abbreviation for Multi Band OFDM Alliance. Further, NFC is the abbreviation for Near Field Communication. UWB includes Wireless Universal Serial Bus (Wireless USB), Wireless 1394, and WiMedia Network (WiNET). Further, communication standards for wired communication such as wired local area networks (wired LANs) may also be supported. Specific examples of the AP MLD 102 include, but are not limited to, a wireless local area network (wireless LAN) router and a personal computer (PC).

Further, the AP MLD 102 may be an information processing apparatus such as a wireless chip capable of performing wireless communication based on the IEEE 802.11be standards. Further, specific examples of the Non-AP MLD 101 include, but are not limited to, a camera, a tablet, a smartphone, a PC, a mobile phone, a video camera, and a headset. Further, the Non-AP MLD 101 may be an information processing apparatus such as a wireless chip capable of performing wireless communication based on the IEEE 802.11be standards. Each communication apparatus can perform communication using the 20, 40, 80, 160, and 320 megahertz (MHz) bandwidths.

Further, the Non-AP MLD 101 and the AP MLD 102 perform Multi-Link communication in which communication is performed by establishing links via a plurality of frequency channels. The IEEE 802.11 series standards define a bandwidth of each frequency channel as 20 MHz, except for the 60 GHz band. For the 60 GHz band, 2.16 GHz is defined. The frequency channel herein is the frequency channel defined by the IEEE 802.11 series standards, and the IEEE 802.11 series standards define a plurality of frequency channels for each of the 2.4, 5, 6, and 60 GHz frequency bands. A bandwidth of 40 MHz or wider may be used in a single frequency channel by bonding to an adjacent frequency channel.

For example, the AP MLD 102 is capable of establishing a link with the Non-AP MLD 101 via a first frequency channel of the 2.4 GHz band and communicating with the Non-AP MLD 101. The Non-AP MLD 101 is capable of establishing, in parallel with the link, another link with the AP MLD 102 via a second frequency channel of the 5 GHz band and communicating with the AP MLD 102. In this case, the Non-AP MLD 101 performs Multi-Link communication by maintaining the second link via the second frequency channel in parallel with the link via the first frequency channel. As described above, the AP MLD 102 establishes links with the Non-AP MLD 101 via a plurality of frequency channels, making it possible to improve throughput in the communication with the Non-AP MLD 101.

A plurality of links in different frequency bands may be established between communication devices in Multi-link communication. For example, the Non-AP MLD 101 may be configured to establish a link in each of the 2.4, 5, and 6 GHz bands. Alternatively, links may be established via a plurality of different channels included in the same frequency band. For example, a 6-ch link in the 2.4 GHz band may be established as a first link, and a 1-ch link in the 2.4 GHz band may be established as a second link in addition to the first link. There may be links in the same frequency band and links in different frequency bands. For example, the Non-AP MLD 101 may be configured to establish a 1-ch link in the 2.4 GHz band and a 149-ch link in the 5 GHz band in addition to the 6-ch first link in the 2.4 GHz. The Non-AP MLD 101 and an AP establish a plurality of connections of different frequencies so that even in a case where a band is congested, the Non-AP MLD 101 and the AP can still establish a connection in another band. This makes it possible to prevent a decrease in throughput and a communication delay in the communication with the Non-AP MLD 101.

While there are one AP MLD and one Non-AP MLD in the wireless network in Fig. 1, the number and arrangement of AP MLDs and Non-AP MLDs are not limited to those in Fig. 1. For example, another Non-AP MLD may be added to the wireless network in Fig. 1. Links that are established in this case are not limited in terms of frequency band, number, and frequency width.

In performing Multi-link communication, the AP MLD 102 and the Non-AP MLD 101 perform data transmission/reception with each other via a plurality of links. The data transmission/reception may be performed via one of the links that constitute the Multi-link.

Further, the AP MLD 102 and the Non-AP MLD 101 may be capable of performing Multiple-Input And Multiple-Output (MIMO) communication. In this case, the AP MLD 102 and the Non-AP MLD 101 include a plurality of antennas, and one of the AP MLD 102 and the Non-AP MLD 101 transmits different signals from its antennas using the same frequency channel. On the reception side, all reached signals are simultaneously received from a plurality of streams using the plurality of antennas, and the signals of each stream are separated and decoded. By performing MIMO communication as described above, the AP MLD 102 and the Non-AP MLD 101 can communicate more data in the same amount of time compared to a case where MIMO communication is not performed. Further, the AP MLD 102 and the Non-AP MLD 101 may perform MIMO communication via some of the links in performing Multi-link communication.

### (Configurations of AP MLD and Non-AP MLD)

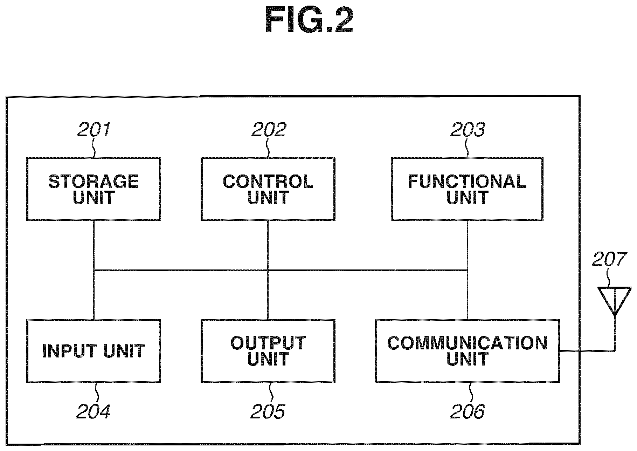

Fig. 2 illustrates an example of a hardware configuration of the Non-AP MLD 101 according to the present exemplary embodiment. The Non-AP MLD 101 includes a storage unit 201, a control unit 202, a functional unit 203, an input unit 204, an output unit 205, a communication unit 206, and an antenna 207. There may be a plurality of antennas.

The storage unit 201 is composed of one or more memories such as a read-only memory (ROM) and a random access memory (RAM) and stores computer programs for performing various operation described below and various information such as communication parameters for wireless communication. ROM is the abbreviation for Read Only Memory, and RAM is the abbreviation for Random Access Memory. As the storage unit 201, a storage medium other than a memory such as a ROM or a RAM may be used, such as a flexible disk, a hard disk, an optical disk, a magneto-optical disk, a compact disk (CD) ROM (CD-ROM), a CD-recordable (CD-R), a magnetic tape, a non-volatile memory card, or a digital versatile disk (DVD). Further, the storage unit 201 may include a plurality of memories.

The control unit 202 is composed of, for example, one or more processors such as a central processing unit (CPU) or a micro-processing unit (MPU) and controls the entire Non-AP MLD 101 by executing computer programs stored in the storage unit 201. The control unit 202 may be configured to control the entire Non-AP MLD 101 in collaboration with computer programs stored in the storage unit 201 and an Operating System (OS). Further, the control unit 202 generates data and signals (wireless frames) to be transmitted in communication with other communication apparatuses. CPU is the abbreviation for Central Processing Unit, and MPU is the abbreviation for Micro Processing Unit. Further, the control unit 202 may include a plurality of processors such as multi-core processors, and the plurality of processors may control the entire Non-AP MLD 101.

Further, the control unit 202 controls the functional unit 203 and performs wireless communication and predetermined processing such as imaging, printing, and projecting. The functional unit 203 is hardware for the Non-AP MLD 101 to perform the predetermined processing.

The input unit 204 receives various operation from users. The output unit 205 performs various outputs to users via a monitor screen and a speaker. The outputs by the output unit 205 may be a display on the monitor screen, an audio output from the speaker, or a vibration output. The input unit 204 and the output unit 205 may be implemented as a single module as in a touch panel. Further, the input unit 204 and the output unit 205 each may be integrated with or separated from the Non-AP MLD 101.

The communication unit 206 controls wireless communication based on the IEEE 802.11be standards. Further, the communication unit 206 may control wireless communication based on not only the IEEE 802.11be standards but also other IEEE 802.11 series standards and may control wired communication such as a wired LAN. The communication unit 206 controls the antenna 207 and transmits and receives signals for wireless communication that are generated by the control unit 202.

In a case where the Non-AP MLD 101 supports the NFC standards and the Bluetooth standards in addition to the IEEE 802.11be standards, wireless communication based on the supported communication standards may also be controlled. Further, in a case where the Non-AP MLD 101 is capable of performing wireless communication based on a plurality of communication standards, a communication unit and an antenna may be included for each of the communication standards. The Non-AP MLD 101 communicates data such as image data, document data, and video data with the Non-AP MLD 101 via the communication unit 206. The antenna 207 may be configured as a separate component from the communication unit 206 or may be combined with the communication unit 206 into a single module.

The antenna 207 is an antenna capable of performing communication in the 2.4, 5, and 6 GHz bands. While the Non-AP MLD 101 includes a single antenna according to the present exemplary embodiment, the Non-AP MLD 101 may include three antennas. Alternatively, different antennas for different frequency bands may be included. Further, in a case where the Non-AP MLD 101 includes a plurality of antennas, the Non-AP MLD 101 may include the communication unit 206 for each antenna.

The AP MLD 102 has a hardware configuration similar to that of the Non-AP MLD 101.

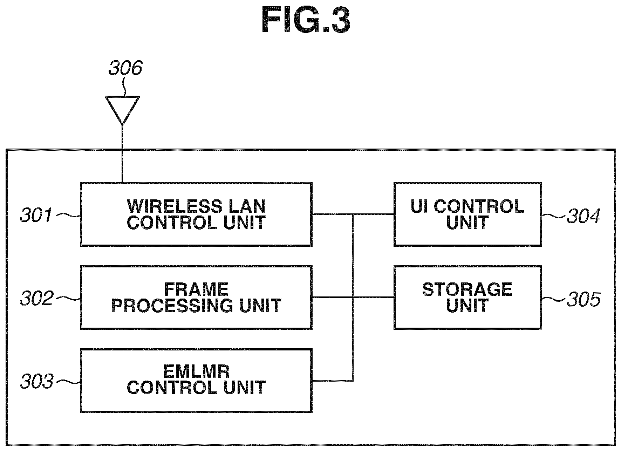

Fig. 3 is a block diagram illustrating a functional configuration of the Non-AP MLD 101 according to the present exemplary embodiment. The AP MLD 102 also has a similar configuration. The Non-AP MLD 101 herein includes a wireless LAN control unit 301. The number of wireless LAN control units is not limited to one and may be two or three or more. The Non-AP MLD 101 further includes a frame processing unit 302, an enhanced multi-link multi-radio (EMLMR) management unit 303, a user interface (UI) control unit 304 and a storage unit 305, and a wireless antenna 306.

The wireless LAN control unit 301 includes an antenna and a circuit for transmitting and receiving wireless signals to and from other wireless LAN apparatuses and includes programs for controlling them. The wireless LAN control unit 301 controls wireless LAN communication based on frames generated in accordance with the IEEE 802.11 standard series by the frame processing unit 302.

The frame processing unit 302 processes wireless control frames that the wireless LAN control unit 301 transmits or receives. Constraints may be imposed on details of wireless control that the frame processing unit 302 generates and analyzes based on settings stored in the storage unit 305. Further, changes may be made based on user settings from the UI control unit 304. Generated frame information is transmitted to the wireless LAN control unit 301 and is transmitted to the communication counterpart. The frame information received by the wireless LAN control unit 301 is transmitted to the frame processing unit 302 to be analyzed.

The EMLMR management unit 303 performs management control to determine which link to take as an EMLMR link. The management control includes EMLMR link establishment and EMLMR link removal.

The EMLMR link establishment refers to a state where an EMLMR link is identified at the time of Multi-Link establishment or after Multi-Link establishment. The EMLMR link removal refers to releasing the state of the link identified as the EMLMR link.

The UI control unit 304 includes unillustrated hardware related to a user interface such as a touch panel or buttons for receiving operation on the Non-AP MLD 101 by users of the Non-AP MLD 101 and includes programs for controlling them. The UI control unit 304 also has a function for, for example, displaying images or presenting information such as audio output to a user.

The storage unit 305 is a storage device that may be formed by a ROM and a RAM that store programs for operating the Non-AP MLD 101 and data.

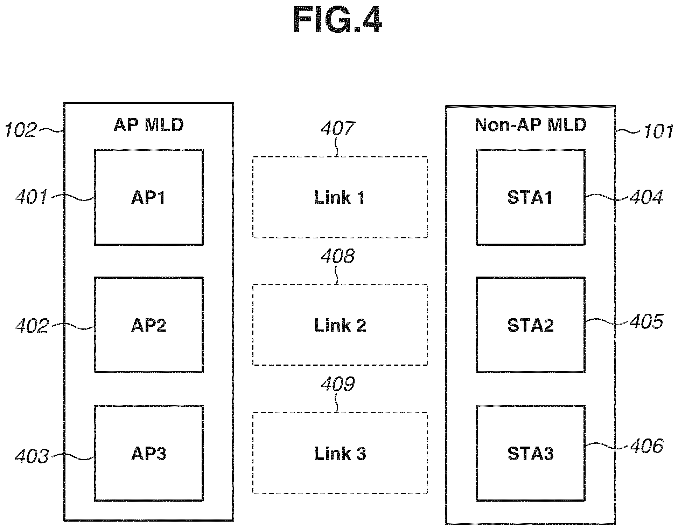

Fig. 4 illustrates configurations of an AP MLD and a Non-AP MLD that perform Multi-Link communication.

A communication apparatus that operates using a Multi-Link is referred to as Multi-Link Device (MLD), and a single MLD includes a plurality of STAs each associated with a Link and a plurality of Access Points (APs) each associated with a Link. A MLD with an AP function is referred to as AP MLD, and a MLD without an AP function is referred to as Non-AP MLD.

In Fig. 4, an AP1 401 and a STA1 404 establish a Link 1 407 via a first frequency channel. Similarly, an AP2 402 and a STA2 405 establish a Link 2 408 via a second frequency channel, and an AP3 403 and a STA3 406 establish a Link 3 409 via a third frequency channel.

The AP MLD and the Non-AP MLD establish connection via frequency channels in the sub-, 2.4, 3.6, 4.9 and 5, 60, and 6 GHz bands. The AP MLD and the Non-AP MLD maintain the connection of the second link via the second frequency channel in parallel with the connection of the first link via the first frequency channel. Further, not connections of different frequency bandwidths but a plurality of connections via different frequency channels of the same frequency bandwidth may be established.

Further, a number of spatial streams based on spatial stream capabilities (per-link spatial stream capabilities) is allocated to each of the Link 1, the Link 2, and the Link 3. In a case where it is assumed that there are six antennas, each link is a link using two antennas. Specifically, the spatial stream capability of each link is "2". As described below, in a case where the Link 1 and the Link 2 and/or the Link 3 are EMLMR links, the spatial stream capability of the Link 1 during EMLMR Operation is "4" or "6" while the spatial stream capability of the Link 2 and/or Link 3 is "0". This makes it possible to transmit and receive each data divided from one data or a plurality of different pieces of data via the Link 1 using a plurality of antennas at the same timing and same frequency without spatial interference. The determination of a number of spatial streams is performed based on an EHT Capabilities element or an EHT Operation element included in a frame declaring that the no-AP MLD supports EHT. Specifically, the determination is performed based on a value in a Supported EHT-MCS And NSS Set field or a Basic EHT-MCS And NSS Set field included in the EHT Capabilities element or the EHT Operation element.

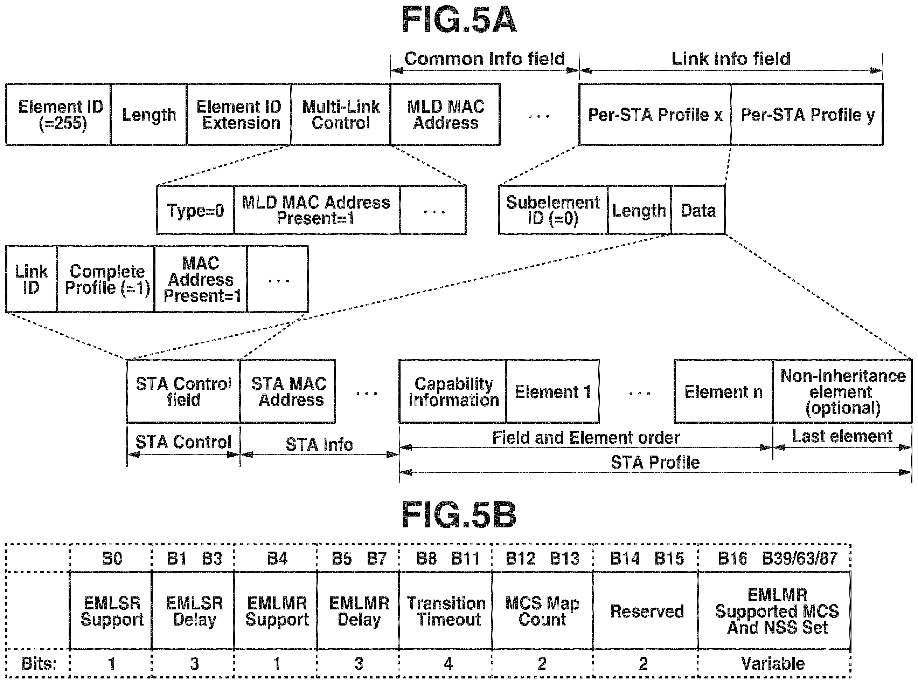

Fig. 5A illustrates a Basic variant Multi-Link element in an Association Request frame. Fig. 5B illustrates an EMLMR Capabilities subfield included in a Common Info field of a Basic variant Multi-Link element. An EMLMR Support field that is "0" indicates that EMLMR is not supported, whereas an EMLMR Support field that is "1" indicates that EMLMR is supported. In a case where Multi-Link communication is established, an EMLMR link is established on all links. While the Basic variant Multi-Link element is described as being included in the Association Request frame in establishing a Multi-Link, the Basic variant Multi-Link element may be included in a probe request frame, a probe response frame, an association response frame, or a Beacon frame.

The EMLMR link establishment is performed by transmitting, receiving, or exchanging a frame including an EMLMR Support subfield with a value of 1 via each link of the Multi-Link. At this time, that may be performed via only some of the links of the Multi-Link to thereby establish an EMLMR link only on the some of the links. Further, a frame including an EMLMR Support subfield with a value of 1 may be transmitted, received, or exchanged via a single link to thereby establish an EMLMR link on a plurality of links including other links. In this case, an EMLMR link may be established on all of the links of the Multi-Link or may be established only on some of the links. In order to designate a link on which an EMLMR link is to be established, information for link identification of the link on which an EMLMR link is to be established may be included in a frame including an EMLMR Support subfield with a value of 1 to thereby designate the link on which an EMLMR link is to be established. As the information for link identification, a Link identifier (link ID), a Basic service set identifier (BSSID) corresponding to the link, or a Traffic identifier (TID) may be used.

An EMLMR Supported MCS And NSS Set subfield indicates a maximum number of spatial streams in PPDU transmission/reception during EMLMR operation. As a result of EMLMR operation on a specific link, the number of spatial streams allocated to links other than the link on which the EMLMR operation is performed decreases, and this enables PPDU transmission/reception on the specific link with the increased number of spatial streams.

While an instruction to establish an EMLMR link at the time of Multi-Link establishment is issued, EMLMR link establishment may be designated in an Action frame transmitted after Multi-Link establishment. In this case, a frame referred to as Enhanced Multi-Link (EML) Operating Mode Notification frame may be prepared, and an instruction to establish an EMLMR link may be issued. For example, in the case of the Non AP MLD, upon receiving a frame including an EMLMR Support subfield with a value of 1 and transmitting an EML Operating Mode Notification frame including an EMLMR Mode subfield with a value of 1, an EMLMR link is established on a link used to transmit or receive the frames. Alternatively, an EMLMR link may be established on some other links of the Multi-link or on all of the links of the Multi-link. Further, in the case of the AP MLD, upon transmitting a frame including an EMLMR Support subfield with a value of 1 and receiving an EML Operating Mode Notification frame including an EMLMR Mode subfield with a value of 1, an EMLMR link is established on a link used to transmit or receive the frames. Alternatively, an EMLMR link may be established on some other links of the Multi-link or on all of the links of the Multi-link. In this case, information for link identification of links on which an EMLMR link is to be established may be included in an EML Operating Mode Notification frame to thereby designate the links on which an EMLMR link is to be established. As the information for link identification, a Link identifier (link ID), a Basic service set identifier (BSSID) corresponding to the link, or a Traffic identifier (TID) may be used.

While the Non-AP MLD takes the initiative to establish an EMLMR link in the above description, the AP MLD may issue an instruction to establish an EMLMR link. The EML Operating Mode Notification frame is an Action frame that is transmitted so that the Non-AP MLD operates in the EMLMR mode, and is a frame that is to be transmitted so that the Non-AP MLD operates in the EMLMR mode in a case where no EMLMR link is established on establishing Multi-Link communication or in a case where an EMLMR link is established but removed thereafter.

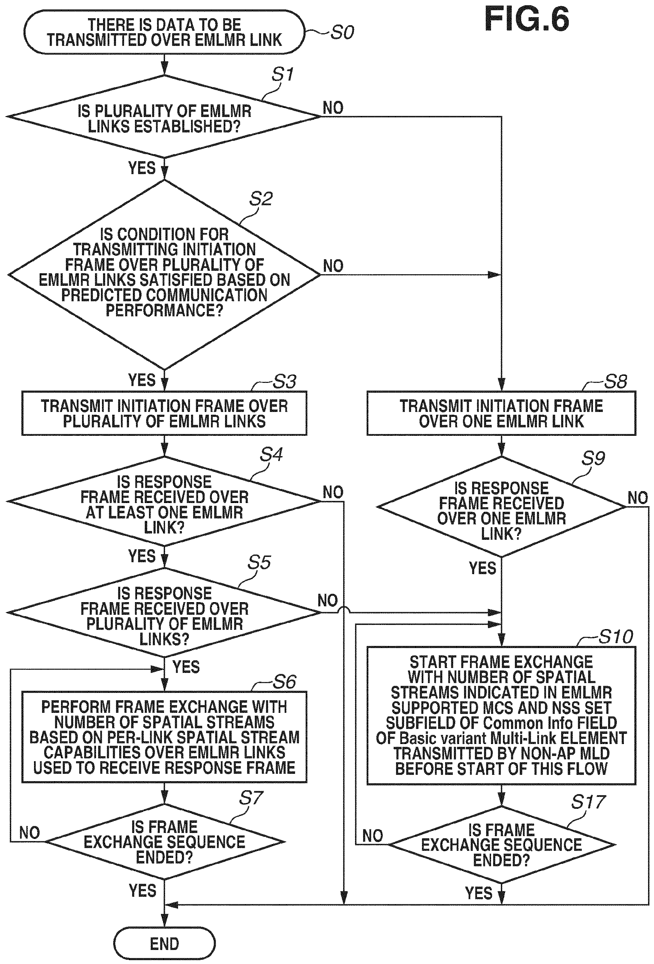

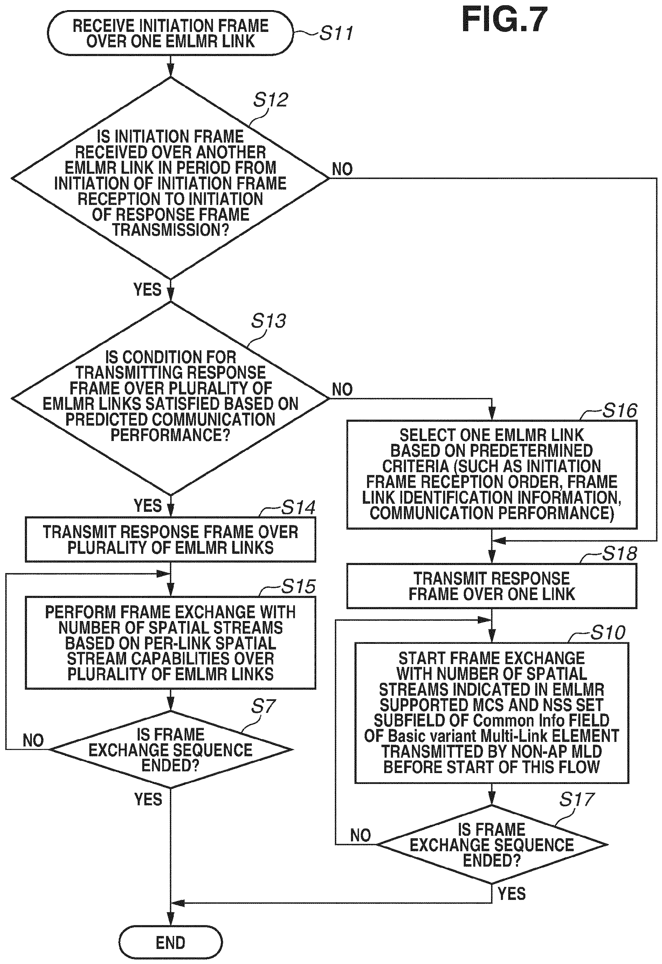

Next, operation of the AP MLD 102 in a case where the AP MLD 102 operates in the EMLMR mode after EMLMR link establishment and performs frame exchange will be described below with reference to Figs. 6 and 7. While the operative entity of the operation described below is the frame processing unit 302 or the EMLMR control unit 303, the operation as a communication apparatus is the operation of the AP MLD 102. Thus, the control unit 202 of the communication apparatus will be described below as the operative entity of the operation. The operation may be performed by the non AP MLD 101.

First, the operation in a case of transmitting an initiation frame will be described below with reference to Fig. 6. Since a frame exchange sequence starts from the timing of initiation frame transmission, the expression that an EMLMR link that performs EMLMR operation continues the frame exchange sequence is used in the invention of the present application. In S0, the control unit 202 determines that there is data to be transmitted to a communication apparatus that becomes a communication counterpart. The data to be transmitted is data such as data for which a request to transmit to the communication apparatus that becomes a communication counterpart is issued from a communication apparatus or data generated by the functional unit 203.

In S1, the control unit 202 determines whether a plurality of EMLMR links is established. For example, in a case where not only the Link 1 but also the Link 2 is established, the determination result is Yes, whereas in a case where only the Link 1 is established, the determination result is No. A possible method for checking whether a plurality of EMLMR links is established is a method in which whether a frame including an EMLMR Support subfield with a value of 1 is transmitted and received over each of the plurality of links is determined. Another possible method is a method in which whether a frame including an EMLMR Support subfield with a value of 1 is transmitted over each of the plurality of links and an EML Operating Mode Notification frame including an EMLMR Mode subfield with a value of 1 is received over each of the plurality of links is determined. Alternatively, the above-described determination may be performed on not each of the plurality of links but one of the links of the Multi-link to thereby check whether a plurality of EMLMR links is established.

In this case, frames including an EMLMR Support subfield with a value of 1 and information for link identification of links on which an EMI,MR link is to be established may be exchanged, and in a case where there is a plurality of links with matching information for link identification in the frames transmitted by them, it may be determined that a plurality of EMLMR links is established. In the case of the Non-AP MLD, an EML Operating Mode Notification frame including information for link identification of links on which an EMLMR link is to be established may be transmitted instead of a frame including an EMLMR Support subfield and information for link identification of links on which an EMLMR link is to be established. In the case of the AP MLD, an EML Operating Mode Notification frame including information for link identification of links on which an EMLMR link is to be established may be received instead of a frame including an EMLMR Support subfield and information for link identification of links on which an EMLMR link is to be established.

In a case where the determination result in S1 is No, the processing proceeds to S8. In S8, the control unit 202 transmits an initiation frame over the EMLMR link. The initiation frame of the EMLMR link is a frame transmitted initially in the frame exchange sequence (Frame exchange sequence) defined in Annex G in the IEEE 802.11 specification. Examples thereof include a Request To Send (RTS) frame and a MU-RTS Trigger frame. The initiation frame becomes an instruction to initiate frame exchange over an EMLMR link after EMLMR link establishment.

In S9, the control unit 202 determines whether a response frame is received. A response frame of an EMLMR link is a frame transmitted as a response to an initiation frame from a communication apparatus having received the initiation frame in the frame exchange sequence (Frame exchange sequence) defined in Annex G in the IEEE 802.11 specification. Examples thereof include a Clear To Send (CTS) frame.

In S 10, the control unit 202 starts the frame exchange sequence with a number of spatial streams up to a number of spatial streams indicated in an EMLMR SUPPORTED MCS AND NSS SET subfield of a Common Info field of a Basic variant Multi-Link element transmitted by the Non-AP MLD before the start of the flow. Consequently, EMLMR operation is performed over one EMLMR link. In S17, whether the frame exchange sequence is ended is determined, and in a case where the determination result is Yes, the process is ended. The description up to this point is based on the assumption of so-called normal EMLMR operation.

Next, the operation in a case where the determination result in S1 is Yes, i.e., a plurality of EMLMR links is established, will be described below. In S2, whether a condition for transmitting an initiation frame over the plurality of EMLMR links is satisfied is determined based on predicted communication performance. A possible method for predicting communication performance is a method in which communication performance is predicted based on channel congestion levels corresponding to the links, i.e., the number of Non-AP MLDs connected to the AP MLD. Further, another possible method is a method in which reception signal strengths and/or signal-to-noise ratios of the links are measured and communication performance of the links is predicted. For example, in a case where the channel of one of the Link 1 and the Link 2 is considerably more congested than the other link or the Link 1 or the Link 2 is low in reception signal strength, it is not possible for both of the links to operate optimally, so that in order to perform EMLMR operation over one of the Link 1 and the Link 2, the processing proceeds to S8. On the other hand, in a case where the channels of the Link 1 and the Link 2 are equally congested or are sufficiently vacant or the reception signal strengths of the Link 1 and the Link 2 are low or sufficiently high, communication performance enhancement from EMLMR operation cannot be expected, so that in order to transmit and receive data with the number of spatial streams based on the spatial stream capability of each link, the processing proceeds to S3.

In S3, the control unit 202 transmits an initiation frame over the plurality of EMLMR links. At this time, a number of spatial streams based on the spatial stream capability of each link is designated. Specifically, it is the number determined based on an EHT Capabilities element or an EHT Operation element included in a frame declaring that the Non-AP MLD supports EHT. Other links on which no EMLMR link is established are not a link over which the frame exchange sequence is performed.

In S4, the control unit 202 determines whether a response frame is received over at least one EMLMR link. In a case where no response frame is received within a specific period, it is determined that the frame exchange sequence is not to be performed over the EMLMR links, and the process is ended. On the other hand, in a case where a response frame is received, the processing proceeds to S5. In S5, the control unit 202 determines whether the response frame is received over a plurality of EMLMR links. In a case where the determination result in S5 is No, the processing proceeds to S10. In a case where the determination result in S5 is Yes, the processing proceeds to S6. In S6, the control unit 202 performs frame exchange with the number of spatial streams based on the per-link spatial stream capabilities over the EMLMR links used to receive the response frame. In S7, whether the frame exchange sequence is ended is determined, and in a case where the determination result is Yes, the process is ended.

Next, the operation in a case of receiving an initiation frame will be described below with reference to Fig. 7. Each step in Fig. 7 that is given the same reference number as in Fig. 6 is as described above with reference to Fig. 6, so that redundant descriptions thereof will be omitted. In S11, the flow is executed after the control unit 202 receives an initiation frame over an EMLMR link. In S12, the control unit 202 detects whether another initiation frame is received over another EMLMR link different from the selected EMLMR link in the period from the initiation of initiation frame reception to the initiation of response frame transmission. In a case where the determination result in S12 is No, the processing proceeds to S18. In S18, the control unit 202 transmits a response frame to the received initiation frame. Subsequent steps are as described above with reference to Fig. 6.

In a case where the determination result in S12 is Yes, the processing proceeds to S13. In S13, whether a condition for transmitting a response frame over a plurality of EMLMR links is satisfied is determined based on predicted communication performance. A possible method for predicting communication performance is a method in which communication performance is predicted based on channel congestion levels corresponding to the links, i.e., the number of Non-AP MLDs connected to the AP MLD, as in S2. Further, another possible method is a method in which reception signal strengths and/or signal-to-noise ratios of the links are measured and communication performance of the links is predicted.

In a case where the determination result in S13 is No, the processing proceeds to S16. In S16, the control unit 202 selects one EMLMR link from the EMLMR links used to transmit or receive the initiation frames based on predetermined criteria. EMLMR operation is performed over the selected EMLMR link. The predetermined criteria are determined as follows. In broad terms, there are three determination methods that are (1) a method of selecting based on information for link identification (such as link ID), (2) a method of selecting based on an EMI,MR link establishment order, and (3) communication performance (such as channel congestion levels corresponding to the links (the number of STAs connected to an AP)), and the selection is performed based on at least one of the methods.

In the case of selecting based on information for link identification (such as link ID), the determination is performed by referring to a Link ID subfield of a Multi-Link element illustrated in Fig. 5A. The Link ID is an ID assigned to each link upon Multi-Link establishment. In a case where link IDs are assigned in the establishment order, a link with a low link ID number is selected as the one EMLMR link among the plurality of EMLMR links. Alternatively, a link with a high link ID number may be selected as the one EMLMR link.

In the case of selecting based on the EMLMR link establishment order, the selection is performed based on, more specifically, at least one of the following orders.
- A transmission order of frames including an EMLMR Support subfield with a value of 1.
- A reception order of frames including an EMLMR Support subfield with a value of 1.
- An order of transmission and reception of frames including an EMLMR Support subfield with a value of 1.
- A transmission order of EML Operating Mode Notification frames including an EMLMR Mode subfield with a value of 1 (in the case of the Non-AP MLD).
- A reception order of EMI, Operating Mode Notification frames including an EMLMR Mode subfield with a value of 1 (in the case of the AP MLD).
- An order of reception of frames including an EMLMR Support subfield with a value of 1 and transmission of EML Operating Mode Notification frames including an EMLMR Mode subfield with a value of 1 (in the case of the Non-AP MLD).
- An order of transmission of frames including an EMLMR Support subfield with a value of 1 and reception of EML Operating Mode Notification frames including an EMLMR Mode subfield with a value of 1 (in the case of the AP MLD).

In a case where the frames include information for link identification of links on which an EMLMR link is to be established, an EMLMR link identified by the information may be selected based on a transmission or reception order of the information. Further, an EMLMR link identified by information for link identification of links on which an EMLMR link is to be established may be selected based on an order in which the information that is transmitted matches the information that is received.

Based on the order, each EMLMR link is assigned an order starting from the value of 1. Specifically, an EMLMR link with a link order that is 1 is the EMLMR link selected based on the predetermined criteria. For example, in a case where the AP MLD receives a frame including an EMLMR Support subfield with a value of 1 over the Link 1 and thereafter receives a frame including an EMLMR Support subfield with a value of 1 over the Link 2 in a case of selecting an EMLMR link based on a reception order of frames including an EMLMR Support subfield with a value of 1, the Link 1 is assigned the order of 1, so that the Link 1 is selected. In a case of selecting a plurality of EMLMR links, EMLMR links are selected in ascending order of the order up to a specified value indicating the number of EMLMR links that can be established, which will be described below in the Other Exemplary Embodiments section.

In the case of selecting based on communication performance, channel congestion levels corresponding to the EMLMR links are measured, and an EMLMR link with the lowest congestion level is selected as the one EMLMR link. Possible measurement methods are a method in which the determination is performed based on the number of STAs connected to an AP and a method in which a channel occupancy rate in each link of the Multi-Link is calculated.

In a case where the determination result in S 13 is Yes, the processing proceeds to S 14. In S14, the control unit 202 transmits a response frame over the plurality of EMLMR links used to receive the initiation frames, and the processing proceeds to S 15. In S 15, the control unit 202 performs frame exchange with the number of spatial streams based on the per-link spatial stream capabilities over the EMLMR links used to transmit the response frames. In S7, whether the frame exchange sequence is ended is determined, and in a case where the determination result is Yes, the process is ended.

A method for controlling the operation in the EMLMR mode properly in a case where a plurality of initiation frames is exchanged with a communication apparatus to be a counterpart before the EMLMR operation starts according to a first exemplary embodiment has been described above. A specific method for performing control properly is a control method in which the frame exchange is performed over one EMLMR link or a plurality of EMLMR links based on whether to exchange the frame exchange sequence over the plurality of EMLMR links. In a case where the frame exchange sequence is continued over a selected EMLMR link and there is an unselected EMLMR link, the frame exchange sequence over the EMLMR link is temporarily stopped.

### [Other Exemplary Embodiments]

According to the first exemplary embodiment, whether a response frame is received over a plurality of EMI,MR links is determined in S5 in Fig. 6, and the processing proceeds to S6 or S10 based on the determination result. Alternatively, S5 may be skipped. In this case, whether a response frame is received over at least one EMLMR link is determined in S4, and in a case where the determination result is Yes, the processing proceeds to step S6.

While the method in which one EMLMR link is selected according to the first exemplary embodiment is disclosed above, a plurality of EMLMR links may operate in the EMLMR mode. For example, there may be a case where four links Link 1 to Link 4 are formed between a communication apparatus and a counterpart communication apparatus. In a case where the Link 1 and the Link 2 are to operate as EMLMR links, a method of allocating the spatial streams of the Link 3 to the Link 1 and allocating the spatial streams of the Link 4 to the Link 2 may be used. Consequently, the number of spatial streams of the Link 1 and the number of spatial streams of the Link 2 increase while the number of spatial streams of the Link 3 and the number of spatial streams of the Link 4 decrease. Since the foregoing case is also possible, in a case where there may be a plurality of EMLMR links to increase a number of spatial streams, a plurality of EMLMR links may be selected based on the predetermined criteria in S8 in Fig. 6 and S16 in Fig. 7. Then, in S9 in Fig. 6, whether a response frame is received over each selected EMLMR link may be determined, and in S10, the EMLMR operation may be performed over each EMLMR link used to receive a response frame. Further, in S18 in Fig. 7, a response frame may be transmitted over each selected EMLMR link, and in S 10, the EMLMR operation may be performed over each EMLMR link used to transmit a response frame.

While the selection based on the EMLMR link establishment order is performed in ascending order according to the first exemplary embodiment, the selection may be performed in descending order, or the middle order may be selected first.

While Basic variant Multi-Link elements are described above according to the first exemplary embodiment, Basic Multi-Link elements may be used, and EMLMR Supported MCS And NSS Set subfields may be EMLMR Rx NSS subfield and EMLMR Tx NSS subfields. In this case, an EMLMR Rx NSS subfield indicates a maximum number of spatial streams for reception, and an EMLMR Tx NSS subfield indicates a maximum number of spatial streams for transmission.

A recording medium in which program codes of software for realizing the above-described functions are recorded may be supplied to a system or an apparatus, and a computer (CPU, MPU) of the system or the apparatus may read the program codes stored in the recording medium and execute the read program codes. In this case, the program codes read from the storage medium realize the functions of the above-described exemplary embodiments, and the storage medium storing the program codes forms the above-described apparatus.

As a storage medium for supplying the program codes, for example, a flexible disk, a hard disk, an optical disk, a magneto-optical disk, a CD-ROM, a CD-R, a magnetic tape, a non-volatile memory card, a ROM, or a DVD may be used.

Further, the computer may realize the above-described functions by executing the read program codes, or an OS running on the computer may realize the above-described functions by performing part or all of actual processes based on instructions of the program codes. OS is the abbreviation for Operating System.

Furthermore, the program codes read from the storage medium may be written to a memory of a function expansion board inserted in the computer or a memory of a function expansion unit connected to the computer. Then, a CPU of the function expansion board or the function expansion unit may perform part or all of actual processes based on the instructions of the program codes and realize the above-described functions.

The present invention can also be realized by a process in which a program for realizing one or more functions of the above-described exemplary embodiments is supplied to a system or an apparatus via a network or a storage medium and one or more processors of a computer of the system or the apparatus read the program and execute the read program. Further, the present invention can also be realized by a circuit (e.g., application-specific integrated circuit (ASIC)) configured to realize one or more functions.

The present invention is not limited to the above-described exemplary embodiments, and various changes and modifications can be made without departing from the spirit and scope of the present invention. The following claims are attached to disclose the scope of the present invention.

The present application claims priority to Japanese Patent Application No. 2021-162358 filed September 30, 2021, which is incorporated by reference herein in its entirety.

## Claims

1. A communication apparatus configured to operate as a Multi-Link Device based on the Institute of Electrical and Electronics Engineers (IEEE) series standards, the communication apparatus comprising:
a detection unit configured to detect reception of a second initiation frame for initiating a frame exchange sequence over a second Enhanced multi-link multi-radio (EMLMR) link different from a first EMLMR link from another communication apparatus in a period from reception of a first initiation frame for initiating the frame exchange sequence over the first EMLMR link from the other communication apparatus to transmission of a response frame to the first initiation frame; and
a control unit configured to perform control to continue the frame exchange sequence over the first EMLMR link or the second EMLMR link in a case where the reception of the second initiation frame in the period is detected by the detection unit.

2. The communication apparatus according to Claim 1, wherein the control unit performs control to continue the frame exchange sequence over the first EMLMR link or the second EMLMR link based on a link identifier (link ID) assigned to each link in Multi-Link communication.

3. The communication apparatus according to Claim 1, wherein the control unit performs control to continue the frame exchange sequence over the first EMLMR link or the second EMLMR link based on an EMLMR link establishment order of each link in Multi-Link communication.

4. The communication apparatus according to Claim 1, wherein the control unit performs control to continue the frame exchange sequence over the first EMLMR link or the second EMLMR link based on communication performance of each link in Multi-Link communication.

5. The communication apparatus according to any one of Claims 1 to 4, wherein in a case where the control unit performs control to continue the frame exchange sequence over the first EMLMR link, the control unit performs control to continue the frame exchange sequence with a number of spatial streams up to a value defined in an EMLMR SUPPORTED MCS AND NSS SET subfield by the communication apparatus or the other communication apparatus that operates as a non-access point multi-link device (Non-AP MLD).

6. The communication apparatus according to any one of Claims 1 to 5, wherein in a case where the control unit performs control to start the frame exchange sequence over the second EMLMR link, the control unit performs control to continue the frame exchange sequence with a number of spatial streams up to a value defined in an EMLMR SUPPORTED MCS AND NSS SET subfield by the communication apparatus or the other communication apparatus that operates as a Non-AP MLD.

7. The communication apparatus according to any one of Claims 1 to 6, wherein the control unit removes the EMLMR link used to perform the frame exchange sequence in a case where the frame exchange sequence ends.

8. A communication apparatus configured to operate as a Multi-Link Device based on the IEEE 802.11 series standards, the communication apparatus comprising:
a detection unit configured to detect reception of a second initiation frame for initiating a frame exchange sequence over a second EMLMR link different from a first EMLMR link from another communication apparatus in a period from reception of a first initiation frame for initiating the frame exchange sequence over the first EMLMR link from the other communication apparatus to transmission of a response frame to the first initiation frame; and
a control unit configured to perform control to perform the frame exchange sequence with a number of per-link spatial streams allocated to the first EMLMR link and a number of per-link spatial streams allocated to the second EMLMR link in a case where the reception of the second initiation frame in the period is detected by the detection unit.

9. A method for controlling a communication apparatus configured to operate as a Multi-Link Device based on the IEEE 802.11 series standards, the method comprising:
detecting reception of a second initiation frame for initiating a frame exchange sequence over a second EMLMR link different from a first EMLMR link from another communication apparatus in a period from reception of a first initiation frame for initiating the frame exchange sequence over the first EMLMR link from the other communication apparatus to transmission of a response frame to the first initiation frame; and
performing control to continue the frame exchange sequence over the first EMLMR link or the second EMLMR link in a case where the reception of the second initiation frame in the period is detected.

10. A method for controlling a communication apparatus configured to operate as a Multi-Link Device based on the IEEE 802.11 series standards, the method comprising:
detecting reception of a second initiation frame for initiating a frame exchange sequence over a second EMLMR link different from a first EMLMR link from another communication apparatus in a period from reception of a first initiation frame for initiating the frame exchange sequence over the first EMLMR link from the other communication apparatus to transmission of a response frame to the first initiation frame; and
performing control to perform the frame exchange sequence with a number of per-link spatial streams allocated to the first EMLMR link and a number of per-link spatial streams allocated to the second EMLMR link in a case where the reception of the second initiation frame in the period is detected.

11. A program for causing a computer to function as each unit of the communication apparatus according to any one of Claims 1 to 8.
